# EUROPEAN PATENT SPECIFICATION

(11) **EP 1 864 713 B1**
(45) Date of publication and mention of the grant of the patent: **20.11.2013**
(21) Application number: 06729345.6
(22) Date of filing: 17.03.2006
(51) Int. Cl.: B01J 29/74, B01D 53/94, F01N 3/10, F01N 3/28

(54) **OXIDATION CATALYST FOR EXHAUST GAS PURIFICATION AND EXHAUST GAS PURIFICATION SYSTEM USING THE SAME**
OXIDATIONSKATALYSATOR ZUR ABGASREINIGUNG UND ABGASREINIGUNGSSYSTEM
CATALYSEUR D'OXYDATION DESTINE A L'EPURATION DES GAZ D'ECHAPPEMENT ET SYSTEME D'EPURATION DES GAZ D'ECHAPPEMENT COMPRENANT CE DERNIER

(30) Priority: 01.04.2005 JP 2005106283
(43) Date of publication of application: 12.12.2007
(73) Proprietor: N.E. Chemcat Corporation, Tokyo 105-6124 (JP)
(72) Inventor: Hihara, Takashi, Numazu-shi, Shizuoka 4100314 (JP); Nagata, Makoto, Numazu-shi, Shizuoka 4100314 (JP)
(74) Representative: Müller-Boré & Partner Patentanwälte
(86) International application number: PCT/JP2006/305355
(87) International publication number: WO 2006/109417

(56) References cited:
- EP-A1- 1 332 787
- EP-A1- 1 468 720
- EP-A2- 1 121 981
- JP-A- 09 000 872
- JP-A- 09 225 265
- JP-A- 2001 300 319
- JP-A- 2002 239 346
- JP-A- 2004 536 756

## Description

The present invention relates to an oxidation catalyst for exhaust gas purification and exhaust gas purification system using the same, more specifically an oxidation catalyst for exhaust gas purification which is capable of efficiently oxidizing unburned hydrocarbons contained in exhaust gases discharged from an internal combustion engine, and achieves a rise of catalyst temperature with a low rate of fuel injection in an engine, in particular in diesel engine, and an exhaust gas purification system using the same.

Exhaust gases discharged from internal combustion engines, e.g., diesel engines fueled by a diesel fuel, contain various substances produced while the fuel is burned. The exhaust gases contain soot, sulfur oxides (SOx), unburned hydrocarbons (HC), e.g., soluble organic fractions (hereinafter sometimes referred to as SOF), carbon monoxide (CO), particulate matter (PM) and nitrogen oxides (NOx). Therefore, various methods have been proposed to remove these substances hazardous to human bodies and global environments.

Some methods proposed so far for removing carbon monoxide (CO), unburned hydrocarbons (HC) and soluble organic fractions (SOF), among the above-described hazardous substances, dispose an oxidation catalyst in a stream of exhaust gases to oxidize them, where the catalyst comprises an integral-structure support containing a catalytic component, and exhaust gases are passed through the catalyst. Oxidation catalysts for purification of exhaust gases discharged from diesel engines have been extensively studied (such a catalyst is hereinafter sometimes referred to as diesel engine exhaust gas oxidation catalyst, DOC).

It is necessary to place an oxidation catalyst (DOC) in an adequate temperature environment in a diesel engine, for it by itself to be efficiently activated; otherwise it cannot exhibit functions for oxidizing hazardous substances contained in exhaust gases, not only HC but also CO and SOF.

It is a common practice to use two or more species of catalysts, e.g., NOx reduction catalyst, in combination of a DOC for diesel engine exhaust gas purification systems. These catalysts should be also kept at a specific temperature or higher, in order to keep an activated condition and exhibit high purification functions.

A diesel engine, although high in heat/kinetic energy conversion efficiency, involves a disadvantage that a catalyst provided in the engine cannot reach a temperature to exhibit a high catalytic activity in many cases when exhaust gases are directly passed through the catalyst, because the diesel exhaust gas evaluation mode is established for urban areas, where exhaust gases are at low temperature.

Various catalysts have been proposed for oxidation (hereinafter sometimes referred to as combustion) of HC and/or SOF, one of the representative ones being of noble metals, e.g., Pt and Pd, supported by alumina as a base (Pt-Pd/Al₂O₃ catalyst). It is generally accepted that this catalyst exhibits high HC combustibility.

However, it cannot fully exhibit its oxidation functions in a measurement mode (e.g., transient mode established for urban areas) which covers a wide range of exhaust gas temperature, including low temperature.

It is considered, therefore, to incorporate a DOC with zeolite, which has HC storage/release functions, to abate HC emissions by temporarily storing HC remaining unburned at low temperature. However, it is difficult to sufficiently oxidize the stored HC by merely including zeolite in a catalyst.

Patent Document 1 discloses a technique for purification of exhaust gases in two stages by combining a NOx storage/purification catalyst in the first stage with oxidation catalyst in the second stage. The NOx storage/purification catalyst is controlled for NOx storage/release in phase with control of engine combustion conditions to purify NOx in exhaust gases by reduction, where HC and CO in the exhaust gases are used as reductants.

HC and CO are consumed in the first stage for NOx purification, but not completely, with the results that the unconsumed compounds pass through the catalyst while remaining unreacted, and some of them are directly discharged from the engine. Therefore, the techniques adopt an oxidation catalyst in the second stage to purify exhaust gases by oxidizing HC and CO passing through the catalyst in the first stage.

Techniques for removing PM in diesel engine exhaust gases are also under development, due to growing environmental consciousness. These techniques include wall-flow type particulate-capturing filters of monolithic ceramic honeycomb structure; filters of ceramic or metallic fibers (these filters are referred to as DPFs); or catalytic DPFs (hereinafter sometimes referred to as CSFs) for combusting PM captured by the filter to reduce pressure loss caused by PM deposited on the filter and thereby to efficiently remove PM.

It is necessary, even in the above cases, to achieve a rise of exhaust gas temperature for improving regeneration efficiency. Patent Document 2, for example, proposes to supply a large quantity of fuel into the combustion chamber or continuously inject a fuel into exhaust gases.

Patent Document 2 also discloses a regenerator for a filter provided to capture PM contained in diesel engine exhaust gases. The technique accurately detects filter regeneration timing and injects a fuel in a quantity required to combust PM for efficient removal of PM captured by the filter.

For efficient combustion of soot captured by a DPF or CSF, it is desirable to stably keep exhaust gases at high temperature. Merely increasing exhaust gas temperature can be achieved by combining a DOC with a fuel supply means, which, however, deteriorates fuel economy.

A high temperature of 550°C or higher is required for efficient combustion of soot deposited on a DPF or CSF, for which exhaust gas heating means have been studied. Patent Document 3, for example, proposes a technique for achieving a rise of exhaust gas temperature by oxidation activity of a catalyst disposed in a stream of exhaust gases to activate a downstream filter or catalyst of different function.

It also discloses an exhaust gas purification system with different catalysts, with a strongly oxidizing catalyst being arranged in a stream of exhaust gases on the peripheral side, where temperature tends to decrease by heat radiation, to accelerate oxidation of NO or the like and thereby to achieve a rise of gas temperature, and a less strongly oxidizing catalyst being arranged around the channel center, where gas temperature tends to be kept high, to suppress oxidation of NO or the like and temperature rise. This technique is to keep a uniform temperature distribution around a DPF, and thereby to prevent excessively high temperature evolving locally and to avoid melting or damages of the DPF.

The above-described DOC, which oxidizes NO in exhaust gases to form NO₂, is expected to have a function of regenerating the DPF contaminated with soot and PM by continuous oxidation in the presence of NO₂ coming into contact with soot. However, the catalyst disclosed by Patent Document 3 involves cost-related problems, because it needs a sophisticated production process.

Another method for heating exhaust gases adopts an additional heater (disclosed, e.g., by Patent Document 4).

The filter-heating means heats the filter and catalyst support, between which it is positioned, where the heating means itself is also heated by the catalyst support because it is made of a porous, heat-reflecting material to work as a reflector of heat transferred from the heating means. The document claims, therefore, that it can effectively utilize heat, even when a vehicle in which it is provided runs at a low speed, to keep temperature required for oxidation catalyst activation and PM oxidation, and thereby to securely regenerate the filter on which PM is deposited. The method, however, additionally needs the heating means to increase cost, needless to say. Moreover, an increased space for the heating means may prevent its commercialization, when to be applied to a vehicle, which provides a limited space.

These conventional exhaust gas purification systems have failed to exhibit sufficient purification performance, because of lack of highly' functional oxidation catalysts, which lead to increased purification cost.
Patent Document 1: JP-A 2002-224569 (paragraphs [0003], [0004] and [0005])
Patent Document 2: JP-A 2004-19651 ([Claim 1] and paragraph [0006])
Patent Document 3: JP-A 2003-148141 (paragraph [0012])
Patent Document 4: JP-A 2003-27922 ([Claim 1] and paragraph [0040])

It is an object of the present invention to provide an oxidation catalyst on which unburned HC contained in exhaust gases can be efficiently combusted to solve the problems involved in the conventional techniques, in particular an oxidation catalyst which can efficiently oxidize unburned HC contained in exhaust gases discharged from diesel engines and achieve a rise of catalyst temperature. It is another object to provide an exhaust gas purification system which uses the above oxidation catalyst.

The inventors of the present invention have found, after having extensively studied to achieve the above objects, that an oxidation catalyst, in particular that for oxidizing diesel engine exhaust gases (DOC), can suppress fuel consumption, efficiently achieve a rise of exhaust gas temperature and keep exhaust gas temperature, when the catalyst comprises an integral-structure support coated with a catalyst component, which is a mixture of activated alumina and a specific species of zeolite, the alumina carrying a noble metal element, and they have confirmed that the catalyst (hereinafter referred to as the catalyst of the present invention) can improve functions of exhaust gas purification means, in particular in-vehicle catalytic system for diesel engine exhaust gas purification, achieving the present invention.

More specifically, the first aspect of the present invention is an oxidation catalyst for exhaust gas purification, having an integral-structure support coated with a catalyst layer exhibiting a catalytic activity in hydrocarbon oxidation, wherein the catalyst layer contains platinum- and palladium-carrying activated alumina, wherein the activated alumina is present in an amount of 50 % by weight or more based on the total catalyst mass, and further contains β-zeolite ion-exchanged with cerium,
wherein the activated alumina has a specific surface area of 30 to 300 m²/g and is contained at 25 to 285 g per unit volume (liter) of the integral-structure support,
wherein the activated alumina contains 20 to 90 % by weight, based on the total alumina contained in the catalyst, of an alumina/lanthanum composite oxide having an La-O-base structure, and
wherein the β-zeolite ion-exchanged with cerium is contained at 4 to 115 g per unit volume (liter) of the integral-structure support.

The second aspect of the present invention is the oxidation catalyst of the first aspect for exhaust gas purification, wherein platinum and palladium are contained at 0.1 to 5 g and 0.05 to 2 g, respectively, per unit volume (liter) of the integral-structure support.

The third aspect of the present invention is the oxidation catalyst of the first or second aspect for exhaust gas purification, wherein the β-zeolite ion-exchanged with cerium contains cerium (Ce) at 0.15 to 3.4% by weight as cerium oxide (CeO₂).

The fourth aspect of the present invention is the oxidation catalyst of one of the first to third aspects for exhaust gas purification, wherein the β-zeolite ion-exchanged with cerium has a silica (SiO₂)/alumina (Al₂O₃) molar ratio (SAR) of 18 to 200.

The fifth aspect of the present invention is the oxidation catalyst of one of the first to fourth aspects for exhaust gas purification, wherein the integral-structure support is of a flow-through type having a cell density of 100 to 900 cells/inch².

The sixth aspect of the present invention is an exhaust gas purification system equipped with the oxidation catalyst of one of the first to fifth aspects for exhaust gas purification, disposed in a stream of exhaust gases containing unburned hydrocarbons, wherein the exhaust gases are passed through the oxidation catalyst to oxidize the unburned hydrocarbons, and the resulting heat of oxidation is utilized to increase exhaust gas temperature.

The seventh aspect of the present invention is the exhaust gas purification system of the sixth aspect, wherein a catalyst for purifying NOx by adsorption is further disposed in a stream of exhaust gases downstream of the oxidation catalyst.

The eighth aspect of the present invention is the exhaust gas purification system of the sixth or seventh aspect, wherein a filter or catalytic filter for capturing particulate matter contained in the exhaust gases is further disposed in a stream of exhaust gases downstream of the oxidation catalyst.

The oxidation catalyst of the present invention for exhaust gas purification has exhaust gas purification functions and, at the same time, can efficiently and stably achieve a rise of exhaust gas temperature by the heat of oxidation generated as unburned hydrocarbons are oxidized.

Moreover, a catalyst for NOx purification or for catalytic filter (CSF), when provided downstream of the DOC (the catalyst is hereinafter sometimes referred to as the downstream catalyst), can be activated by the heat from the heated exhaust gases to efficiently purify the exhaust gases.

Still more, the DOC of the present invention can efficiently heat exhaust gases, which leads to improved fuel economy, because it needs, if any, a limited quantity of fuel additionally injected for heating the exhaust gases.
Figure 1 outlines an exhaust gas purification system which includes the oxidation catalyst of the present invention;
Figure 2 is a graph which compares the oxidation catalyst of the present invention with those prepared in COMPARATIVE EXAMPLES in performance (heated exhaust gas condition);
Figure 3 is a graph illustrating converted THC conditions in the transient mode, to compare the oxidation catalyst of the present invention with that prepared in COMPARATIVE EXAMPLE in performance; and
Figure 4 is a graph illustrating total quantities of hydrocarbons contained in the exhaust gases (THC), the results corresponding to those illustrated in Figure 3.

Next, the oxidation catalyst for exhaust gas purification and exhaust gas purification system using the same, both of the present invention, are described in detail by referring to the drawings. Application of the present invention is not limited to specific internal combustion engine types. However, it is described mainly taking a diesel engine, in particular an in-vehicle one, in which the present invention can exhibit notable effects.

### 1. Oxidation catalyst for exhaust gas purification

The oxidation catalyst of the present invention for exhaust gas purification has an integral-structure support (C) coated with a catalyst layer exhibiting a catalytic activity in hydrocarbon oxidation, wherein the catalyst layer contains platinum- and palladium-carrying activated alumina (A) as a major component and further contains β-zeolite (B) ion-exchanged with cerium.

### (A) Platinum- and palladium-carrying activated alumina (A)

In the present invention, the platinum- and palladium-carrying activated alumina as a base material is a major component of the oxidation catalyst for exhaust gas purification.

The platinum- and palladium-carrying activated alumina has activities for oxidizing CO, unburned hydrocarbons and NO. The activated alumina is selected from alumina species having a crystal structure of high thermal stability, high catalytic activity and large specific surface area. These species include γ⁻, β⁻, δ⁻, η⁻ and θ-alumina, of which γ-alumina is more preferable.

The activated alumina contains lanthanum (La) to prevent sintering of platinum. The alumina is incorporated with lanthanum in the form of water-soluble salt of lanthanum compound, e.g., nitrate, carbonate, ammonium salt or acetate, or in the form of oxide, e.g., La₂O₃. Lanthanum is present in the alumina in the form of lanthanum oxide, and is present in the form of alumina/lanthanum composite oxide having an La-O-base structure, e.g., La₂O₃.

The Al/La ratio is not limited, and may be in a range from 99/1 to 90/10, preferably from 99/1 98/2 as oxide. At below 99/1, La is present in an insufficient quantity and is not expected to fully exhibit the effect of preventing sintering. The ratio of above 90/10 is not desirable, because La is present excessively and alumina may fail to fully exhibit its characteristics.

The La-containing alumina is present at 20 to 90% by weight based on the total alumina contained in the catalyst of the present invention, preferably 45 to 65% by weight. At below 20% by weight, La is not expected to fully exhibit the effect of preventing sintering. At above 90% by weight, on the other hand, the composition may have a notably increased viscosity, when slurried. The slurry of excessively high viscosity is not preferable, when the integral-structure support is coated with the slurried catalyst.

The preferable La-free other alumina species are not limited, but γ-alumina is preferable.

The activated alumina for the present invention has a BET-determined specific surface area of 30 to 300 m²/g, preferably 100 to 250 m²/g. The alumina having a specific surface area of below 30 m²/g may not highly disperse the catalyst metal therein. On the other hand, the alumina having a specific surface area above 300 m²/g may have insufficient heat resistance characteristics, e.g., insufficient resistance to sintering. These alumina species may be used either individually or in combination.

The activated alumina contains both platinum and palladium as catalyst metals for promoting oxidation of hydrocarbons. Platinum, which exhibits high capability as an oxidation catalyst, may be sintered at high temperature and difficult to keep highly dispersed conditions by itself When alloyed with palladium, the above problems are avoided to keep platinum highly dispersed.

Platinum is preferably contained at 0.1 to 5 g/L, more preferably 0.5 to 4 g/L, and palladium at 0.05 to 2g/L, more preferably 0.1 to 1 g/L, based on unit volume of the integral-structure support. The content of each noble metal element beyond the above range is not desirable. At below the lower limit, it may not fully exhibit its catalytic activity. At above the upper limit, the catalyst cost increases excessively.

The activated alumina as a major component of the catalyst accounts for a largest mass proportion in the catalyst, namely 50% by weight or more based on the total catalyst mass. In other words, zeolite (e.g., β-zeolite or the like) is contained in the catalyst, in addition to the activated alumina, at below 100 parts by weight based on 100 parts by weight of the activated alumina, preferably below 100 parts by weight, more preferably below 80 parts by weight, still more preferably below 50 parts by weight.

### (B) B-zeolite ion-exchanged with cerium

In the present invention, β-zeolite ion-exchanged with cerium works as a promoter for the activated alumina carrying the noble metals, and also functions to improve combustibility of unburned hydrocarbons, because of oxygen-storing capability of cerium oxide.

Zeolite as an aluminosilicate has varying pore shape/size, surface area and so forth depending on composition of silica, alumina and so forth which constitute the zeolite structure. There are various species of zeolite, e.g., Y-zeolite, β-zeolite, moridenite, ferriorite, MFI and so forth. In this invention, β-zeolite is an essential zeolite species, although other species may be present. B-zeolite should account for 10% by weight or more based on the total zeolite species, preferably 20% by weight or more, more preferably 30% by weight or more.

B-zeolite has characteristics of having larger surface area and pores than other species. Its silica (SiO₂)/alumina (Al₂O₃) molar ratio (SAR) is 18 to 200, particularly preferably 18 to 100. The ratio beyond the above range is not desirable. At below 18; it may be insufficient in resistance/stability to hydrothermal conditions and deteriorate at a high rate. At above 200, on the other hand, it may not be sufficiently incorporated with the Ce cation as the active component of the present invention because of insufficient ion-exchanging rate.

B-zeolite is commercially available in various forms. For example, it may be incorporate with an alkaline metal (e.g., Na), or of ammonium type or hydrogen type. For example, ammonium type zeolite ion-exchanged with cerium may be used for the present invention. Cerium (Ce) is preferably contained at 0.15 to 3.4% by weight as cerium oxide (CeO₂) based on β-zeolite. At below 0.15% by weight, the zeolite may not fully exhibit its HC combustion promoting effect. At above 3.4% by weight, on the other hand, it is disadvantageous costwise. The cerium (Ce) content is preferably in the above range, when commercial zeolite ion-exchanged with Ce is used.

It is not fully substantiated why the zeolite cannot sufficiently exhibit the effects of the present invention at a cerium (Ce) content below 0.15% by weight. It is however considered that the insufficient effects result from shortage of oxygen supplied from cerium to the noble metals which provide the oxidation reaction sites, or controlled reaction inhibition resulting from adsorption of HC on the noble metals.

It is not fully substantiated why the catalyst of the present invention exhibits excellent HC purification capability, achieves a rise of exhaust gas temperature and prevents increased temperature from decreasing. Knowing that β-zeolite has functions of reducing hydrocarbon molecule chains of diesel engine fuel and of storing HC in a releasable manner, and Ce has an oxygen storage/release function, β-zeolite combined with Ce in the catalyst brings synergistic effects of facilitating the reaction between released oxygen and HC, and keeping high combustible conditions while continuously releasing HC stored in the zeolite.

### (C) Integral-structure support

The catalyst of the present invention comprises an integral-structure support coated with a catalyst component containing a specific activated alumina species and β-zeolite. [0059]

The integral-structure support material is not limited. It may be cordierite, silicon carbide, silicon nitride, metal or the like, of which cordierite is more preferable. The support preferably has a flow-through structure of low air resistance, e.g., honeycomb structure having a triangular, square or hexagonal cross-section shape.

The integral-structure support has a cell density of 100 to 900 cells/inch², preferably 200 to 600 cells/inch². A support having a cell density above 900 cells/inch² tends to be clogged with PM deposited thereon. On the other hand, a support having a cell density below 100 cells/inch² will have deteriorated effective utilization factor of the catalyst, because of its insufficient geometric surface area.

### 2. Preparation of the catalyst

The catalyst of the present invention can be produced by a combination of impregnation of the activated alumina with the noble metals, milling and coating. The activated alumina supporting dispersed platinum, palladium or their precursors (catalytic metal components) is slurried with an aqueous medium together with the B-zeolite, and the integral-structure support is coated with the resulting slurry mixture, and then heated/calcined.

More specifically, the catalyst of the present invention can be produced by the following steps; (1) the activated alumina is impregnated with a solution containing a platinum and palladium compounds and then dried to carry these noble metals, (2) zeolite is prepared by ion-exchanging the β-zeolite cation with a cerium compound, and (3) the activated alumina carrying platinum and palladium is mixed with the β-zeolite ion-exchanged with cerium, and the resulting catalyst component is slurried with water in the presence of a pH adjustor and brought into contact with the integral-structure support to coat the support with the catalyst layer, the coated support being dried and calcined.

### (1) Preparation of activated alumina carrying platinum and palladium

First, activated alumina, e.g., γ-alumina or alumina/lanthanum oxide mixture, is put in a container. The activated alumina is incorporated in the catalyst layer to have a content of 25 to 285 g/L based on unit volume of the integral-structure support, preferably 50 to 140 g/L. At below 25 g/L, the activated alumina may not fully disperse the noble metals therein. At above 285 g/L, on the other hand, various problems may be anticipated to occur, e.g., deteriorated effective utilization factor of the catalyst and increased cost.

The activated alumina is incorporated with a given quantity of aqueous solution or suspension containing a platinum compound and that containing a palladium compound. For the platinum compound, the aqueous solution or suspension contains platinum (II) nitrite diamine, amine solution of hydroxyplatinic acid or chloroplatinic acid. For the palladium compound, the solution contains palladium nitrate diamine, palladium nitrate or palladium chloride. These aqueous solutions or suspensions each containing a platinum or palladium compound are incorporated in the activated alumina with stirring.

It is preferable that the activated alumina is incorporated first with the aqueous solution or suspension containing a platinum compound, and then with an aqueous solution containing a palladium compound.

Platinum is incorporated in the catalyst layer to have a content of 0.1 to 5 g/L, preferably 0.5 to 4 g/L, and palladium is incorporated in the catalyst layer to have a content of 0.05 to 2 g/L, preferably 0.1 to 1 g/L, all contents being based on unit volume of the integral-structure support. Then the resulting solution is held at room temperature for a given time to impregnate the activated alumina with platinum and palladium.

### (2) Preparation of β-zeolite ion-exchanged with cerium

β-zeolite ion-exchanged with cerium may be adequately selected from the commercial products. When it is produced from β-zeolite, the method is not limited. For example, β-zeolite ion-exchanged with NH₄ ion is ion-exchanged with an aqueous solution containing cerium-containing compound, e.g., cerium nitrate.

The β-zeolite ion-exchanged with cerium is incorporated in the catalyst layer to have a content of 4 to 115 g/L based on unit volume of the integral-structure support, preferably 10 to 100 g/L. At below 4 g/L, the zeolite may have a limited contribution to HC combustibility and fail to achieve a sufficient rise of exhaust gas temperature. At above 115g/L, on the other hand, it may be disadvantageous costwise.

### (3) Coating with catalyst components

The activated alumina prepared above to carry platinum and palladium is mixed with the β-zeolite ion-exchanged cerium, and the resulting mixture is slurried with acetic acid and pure water in a container.

It is preferable to add acetic acid and pure water little by little to the mixture of the activated alumina and β-zeolite with stirring by a mixer while keeping the mixture at a pH of 1.5 to 7.0. Acetic acid may be replaced by another acid. The mixture may be ball-milled, after being pH-adjusted with an alkali and incorporated with a surfactant or dispersed resin.

Next, the integral-structure support is coated with the above slurry. The integral-structure support of ceramic honeycomb structure (flow-through type support) is put in the slurry, and they are sufficiently brought into contact with each other for, e.g., 1 to 60 seconds, and the surplus slurry remaining on the cells is removed by a flow of air. Then, the support carrying the slurry is sprayed with hot air kept at, e.g., 20 to 100°C, to remove at least 50% of water from the support. The dried support is then calcined in air at 200 to 900°C for 10 minutes to 10 hours.

The method for coating the integral-structure support may be selected from various known ones. A combination of drying and calcination of the wash-coated structure is a simple method to securely realize the coated structure.

The above procedure gives the oxidation catalyst of the present invention with the integral-structure support coated with the catalyst layer containing catalysts at 35 to 400 g/L based on unit volume of the support, preferably 60 to 210 g/L. At below 35 g/L, the catalyst may not secure the catalytic effect of the present invention. At above 400 g/L; on the other hand, the integral-structure support is coated with the catalyst layer excessively thickly to increase exhaust gas pressure loss excessively, and also is disadvantageous costwise because of increased number of coating cycles.

### 3. Exhaust gas purification system

The exhaust gas purification system of the present invention is suitable, when the oxidation catalyst of the present invention for exhaust gas purification is disposed in a stream of exhaust gases containing unburned hydrocarbons. It is characterized by passing exhaust gases through the oxidation catalyst to oxidize unburned hydrocarbons and utilizing the heat evolving as a result of the oxidation to achieve a rise of exhaust gas temperature.

The present invention is suitable as an exhaust gas purification system with the oxidation catalyst disposed in a stream of diesel engine exhaust gases. The oxidation catalyst (DOC) is kept at 150°C or higher, preferably 200°C or higher, more preferably 250°C or higher, particularly preferably 250 to 450°C. At lower than 150°C, the catalyst may not fully exhibit its catalytic activity. Catalyst temperature can be generally kept at 150°C or higher by natural heating by exhaust gases. However, an auxiliary heating or insulating means may be additionally provided.

The present invention is applicable when exhaust gases flow at a space velocity of 5,000 to 400,000/hour. At below 5,000/hour, the catalyst requirement increases excessively for rate of exhaust gases discharged from a diesel engine, making it difficult to actually mount the system in a vehicle. At above 400,000/hour, on the other hand, contact time of exhaust gases with the catalyst may be too short to improve HC purification efficiency and achieve a rise of exhaust gas temperature.

The present invention can take various variations of the exhaust gas purification system depending on internal combustion engine type in which it is mounted and exhaust gas regulations. For example, the oxidation catalyst for exhaust gas purification may be followed by one or more post-treatment units, e.g., filter or catalytic filter for capturing particulate matter in exhaust gases; catalyst for purification of nitrogen oxides by adsorption; and combination of filter(s) and/or catalyst(s).

The present invention passes an additional fuel (unburned hydrocarbons) through the oxidation catalyst disposed in a stream of exhaust gases to achieve a rise of exhaust gas temperature. However, supply of an additional fuel may be achieved by temporarily increasing a rate of fuel injected into a combustion chamber of internal combustion engine, or by injecting a fuel into an exhaust pipe or the catalyst system. In any case, the notable effects of the present invention for oxidation of hydrocarbons and achieving a rise of exhaust gas temperature can be exhibited.

However, increasing a rate of fuel injected into a combustion chamber of internal combustion engine is a desirable embodiment, because it can be easily achieved by controlling the fuel injection system while saving a need for designing and installation of a new system or device. It is needless to say that unburned hydrocarbons can be supplied to one or more catalyst units provided downstream of the catalyst of the present invention by an adequate means, if so needed.

### (Catalyst of the present invention + CSF (DPF))

This embodiment of exhaust gas purification system disposes a catalyst or filter in a stream of exhaust gases downstream of the catalyst of the present invention (DOC) to further improve exhaust gas purification efficiency, where the downstream device is activated by hot exhaust gases from the DOC. The oxidation catalyst of the present invention oxidizes NO in exhaust gases into NO₂, and the resulting heat of oxidation can be used for combusting soot deposited on the downstream catalyst, e.g., DPF or CSF.

The present invention brings more noted effects, when the oxidation catalyst is followed by a catalyst (CSF) for PM purification. CSFs have been widely studied for removing PM discharged from diesel engines. Unburned hydrocarbons supplied to the catalyst of the present invention upstream of a CSF may be selected from gasoline, kerosene and residua-containing distillate, in addition to diesel engine fuel, of which diesel engine fuel is more preferable for supply stability, because it saves necessity for securing a space for an additional fuel.

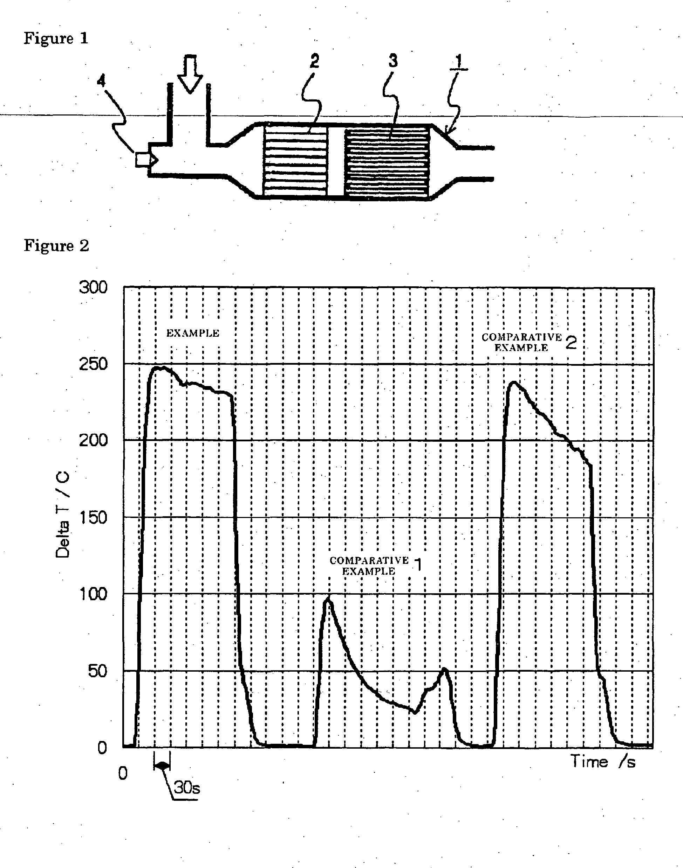

Referring to Figure 1, the diesel engine exhaust gas flow channel 1 is provided with the oxidation catalyst 2 (DOC) of the present invention and catalytic filter 3 (CSF). Exhaust gases flow in the arrowed direction into the DOC and CSF in this order, and are discharged into air via a muffler (not shown). The exhaust gases can pass through the porous cell walls of the oxidation catalyst and catalytic filter while leaving behind fine particles captured by the CSF. In the embodiment illustrated in Figure 1, the injection valve 4 is provided in the diesel engine exhaust gas channel to inject diesel engine fuel as unburned hydrocarbons to form exhaust gases containing the fuel. This design may be replaced by another one which temporarily increases rate of fuel injected into a combustion chamber, as discussed above.

The CSF type is not limited. It may comprise a porous ceramic, e.g., cordierite, coated with γ-alumina or the like, and then impregnated with a noble metal element, e.g., platinum, palladium, rhodium or the like. An integral-structure catalyst as an oxidation catalyst may be partly provided with a CSF catalyst function.

An integral-structure support for a CSF has a number of cells arranged in the exhaust gas flow direction, each cell being preferably closed either in the exhaust gas inlet or outlet side to form a checkered pattern, for example. Each of the cells is defined by porous walls, through which exhaust gases can pass while leaving behind fine particles captured by the CSF. A diesel fuel carried by exhaust gases is oxidized/combusted over the DOC of the present invention, and the resulting heat of oxidation combusts/gasifies fine particles (PM) deposited on the CSF downstream of the oxidation catalyst while regenerating the CSF itself.

### (Catalyst of the present invention + NSR)

This embodiment of exhaust gas purification system adopts a NOx storage/purification catalyst (hereinafter sometimes referred to as NSR) as a downstream catalyst.

The NSR is incorporated with an alkali-earth metal, e.g., Ba or the like, and noble metal, e.g., Rh, Pt or the like, the former serving as a NOx storage material while the latter as a catalytic active species. Its major functions are outlined below.

In an internal combustion engine for a vehicle, NOx emissions are more noted under lean-combustion conditions. Under fuel-rich conditions, on the other hand, NOx emissions decrease but unburned HC and CO emissions are more noted, instead. The lean- and rich-combustion conditions alternate in a vehicle engine, when its accelerator is on or off, or fuel concentration changes. NOx produced under a lean-combustion condition is stored as a barium nitrate by an NSR, and barium nitrate reacts with CO in the presence of HC and CO as reductant components to form barium carbonate to release NO₂ under a subsequent rich-combustion condition. The NO₂ released from the NSR reacts with HC in the presence of a catalytic active species to form N₂ and H₂O to purify the exhaust gases.

At an insufficient exhaust gas temperature, the system will fail to sufficiently purify NOx, because of the retarded reactions described above. In a diesel engine in particular, where NOx emissions cause serious problems, exhaust gas temperature tends to be kept low by its structural features and exhaust gas regulations. Therefore, an NSR provided downstream of the catalyst of the present invention achieves a rise of exhaust gas temperature to improve NOx purification performance for the exhaust gas purification system.

Another component and base material in the NOx storage/purification catalyst composition and integral-structure support shape and so forth are not limited, so long as they have functions of purifying NOx present in exhaust gases of increased temperature. Those also having HC and SOx purification functions may be used. For example, alumina, titania, magnesia, zirconia, either individually or in combination, may be used for the base material, and potassium or the like may be used as an alkali (or alkali-earth) metal species instead of barium.

### (Catalyst of the present invention + two or more downstream catalysts)

This embodiment of exhaust gas purification system adopts two or more species of downstream catalysts selected from the group consisting of CSF (PDF), NSR and DOC.

The positional relationship of the catalyst of the present invention with the downstream catalysts, and number of the downstream catalyst species are adequately set. The combinations of the catalyst of the present invention and downstream catalysts include the catalyst of the present invention + CSF + NSR, catalyst of the present invention + NSR + CSF, catalyst of the present invention + NSR + CSF + NSR, and catalyst of the present invention + NSR + CSF + NSR + DOC.

The catalyst of the present invention may be combined with a selective reduction catalyst as a means of NOx purification. The selective reduction catalyst is for reducing NOx present in exhaust gases, which are in an oxidative atmosphere, with a reductant, e.g., urea or the like as an ammonia supply source. The purification method with such a catalyst is referred to as selective catalytic reduction (SCR), now studied for commercialization as a post-treatment method for exhaust gases, in particular those discharged from diesel engines. The specific combinations with the catalyst of the present invention include the catalyst of the present invention + CSF + SCR catalyst + DOC, and catalyst of the present invention + SCR catalyst/DPF +DOC, wherein the SCR catalyst/DPF means a DPF coated with an SCR catalyst.

When the SCR is adopted, a system for supplying ammonia water, urea water or the like is provided. Some of the NOx reduction catalysts useful for this system include one or more transition metals, e.g., Ni, Mn, Co, Mo, Ti, Fe, V or W, carried by a support, e.g., of alumina, silica/alumina, activated carbon, or zeolite.

Moreover, the catalyst of the present invention may be used in a stacked structure with one or more other catalysts different in composition and/or function.

This catalyst structure is for an exhaust gas purification system which should satisfy a special characteristic required by an environment in which it works. Some examples of such systems are those which work at a relatively high maximum service temperature, need forcible regeneration with exhaust gases passing through the catalyst at a relatively low temperature, are designed to improve diesel fuel oil combustibility, and are required to prevent poisoning of the catalyst of the present invention as an important consideration.

For those which work at a relatively high maximum service temperature or need forcible regeneration with exhaust gases passing through the catalyst at a relatively low temperature, for example, the integral-structure support is coated with a catalyst composition to have a Pt-Pd/Al₂O₃-base catalyst layer as the outermost layer, to improve diesel fuel oil combustibility.

### EXAMPLES

The preferred embodiments of the present invention are described by EXAMPLES, which by no means limit the present invention.

### EXAMPLE 1

A catalyst component was prepared by mixing activated alumina (Mixed Alumina) with β-zeolite ion-exchanged with cerium using the following procedure, after Mixed Alumina was treated to carry catalyst metals (Pt and Pd). Then, an integral-structure support is coated with the catalyst component to prepare the oxidation catalyst of the present invention for exhaust gas purification.

### <Activated alumina>

γ-Al₂O₃ having a specific surface area of 143 m²/g (Alumina 1), γ-Al₂O₃ having a specific surface area of 157 m²/g (Alumina 2) and La-containing γ-Al₂O₃ having a specific surface area of 220 m²/g (γ-Al₂O₃/La₂O₃: 98.4/1.6 by weight, Alumina 3) were mixed with each other to have a 100/74/200 by weight composition (Mixed Alumina). It had a specific surface area of 182 m²/g.

Mixed Alumina was impregnated with a 20% by weight aqueous solution of platinum (II) nitrite diamine and 28% by weight aqueous solution of palladium nitrate diamine to have a Pt and Pd metal element contents of respective 1.47 and 0.49% by weight based on the total composition. It was then dried to prepare Mixed Alumina dispersed with the noble metals (Pt-Pd/Al₂O₃).

### <B-zeolite ion-exchanged with cerium>

B-zeolite ion-exchanged with cerium was prepared by the following procedure.

B-zeolite ion-exchanged with NH₄ ion was dispersed in a 0.05 mols/L aqueous solution of cerium nitrate, and the resulting dispersion was stirred for 24 hours and washed with deionized water. The resulting β-zeolite ion-exchanged with cerium had a cerium (Ce) content of 1.2% by weight as cerium oxide (CeO₂) and β-zeolite silica (SiO₂)/alumina (Al₂O₃) molar ratio (SAR) of 25.

### <Preparation of catalyst component>

The Pt-Pd/Al₂O₃ powder (a), β-zeolite ion-exchanged with cerium (b), β-zeolite ion-exchanged with Fe (c) and MFI zeolite ion-exchanged with hydrogen were mixed with each other and stirred to prepare a catalyst component (Catalyst Component 1). It had a composition of a/b/c/d of 100/16/12/12.

### <Coating of integral-structure support>

A slurry was prepared by incorporating 100 parts by weight of Catalyst Component 1 with 86 parts of water and 7.6 parts of acetic acid with stirring. A commercial ceramic honeycomb support A (400 cpsi, wall thickness: 6 mil) was wash-coated in the slurry, dried and then calcined at 450°C for 0.5 hours to prepare the catalyst-coated support (Catalyst 1 of the present invention). It contained Pt metal, Pd metal and Catalyst Component 1 at 1.5, 0.5 and 142 g/L, respectively.

### <Evaluation of catalyst performance>

In order to evaluate unburned HC oxidation performance of the catalyst, temperature (°C) of exhaust gases leaving the catalyst of the present invention was monitored from start of diesel fuel injection to end of the injection under the following conditions.

Exhaust gas temperature (Bed Temp) was measured at 10 mm upstream of the downstream end plane of the catalyst on the centerline, to determine Bed Temp differential (ΔT) before and after unburned hydrocarbon injection. Figure 2 presents the results illustrating exhaust gas temperature rise behavior, where the axis of ordinate represents ΔT and axis of abscissa represents injection time. The time scale was common to each catalyst monitored.
Catalyst volume: diameter: 143.8 mm and length: 76.2 mm (1240 mL)
Test engine: 2L four-cylinder diesel engine (cylinders are arranged in series)
Rate of diesel fuel injected into the exhaust pipe: 22 mL/minute
Fuel injection time: 3 minutes
Space velocity (SV): 72,800/hour
Rotational speed: 1520 ± 10 rpm
Exhaust gas temperature at the catalyst inlet: 300 ± 5°C
Temperature sensor: 0.5 mm diameter T-type thermocouples

### COMPARATIVE EXAMPLE 1

A catalyst component was prepared by mixing activated alumina (Alumina 2) with β-zeolite ion-exchanged with cerium using the following procedure, after Alumina 2 was treated to carry a catalyst metal (Pt). Then, an integral-structure support is coated with the catalyst component to prepare a comparative oxidation catalyst for exhaust gas purification.

### <Activated alumina>

γ-Al₂O₃ (Alumina 2) having a specific surface area of 157 m²/g was used as activated alumina. Alumina 2 was impregnated with a 20% by weight aqueous solution of platinum (II) nitrite diamine to have a Pt element content of 2.1% by weight. It was then dried to prepare Alumina 2 dispersed with the noble metal (Pt/Al₂O₃).

### <B-zeolite ion-exchanged with cerium>

The β-zeolite ion-exchanged with cerium, prepared in EXAMPLE 1, was used. It had a cerium (Ce) content of 1.2% by weight as cerium oxide (CeO₂) and β-zeolite silica (SiO₂)/alumina (Al₂O₃) molar ratio (SAR) of 25.

### <Preparation of catalyst component>

The Pt-Pd/Al₂O₃ powder (a), β-zeolite ion-exchanged with cerium (b), β-zeolite ion-exchanged with Fe (c) and MFI zeolite ion-exchanged with hydrogen, all described above, were mixed with each other and stirred to prepare a catalyst component (Catalyst Component 2). It had a composition of a/b/c/d of 100/16/12/12.

### <Coating of integral-structure support>

A slurry was prepared by incorporating 100 parts by weight of Catalyst Component 2 with 86 parts of water and 7.6 parts of acetic acid with stirring. A commercial ceramic honeycomb support A (400 cpsi, wall thickness: 6 mil) was wash-coated in the slurry, dried and then calcined at 450°C for 0.5 hours to prepare the catalyst-coated support (Comparative Example Catalyst 1).

It contained Pt metal and Catalyst Component 2 at 2.0 and 173.1 g/L, respectively.

### <Evaluation of catalyst performance>

In order to evaluate unburned HC oxidation performance of the catalyst, temperature (°C) of exhaust gases leaving Comparative Example Catalyst 1 was monitored from start of diesel fuel injection to end of the injection in the same manner as in EXAMPLE 1. Figure 2 presents the results illustrating exhaust gas temperature rise behavior, where the axis of ordinate represents ΔT and axis of abscissa represents injection time.

### COMPARATIVE EXAMPLE 2

A catalyst component was prepared by mixing activated alumina (Mixed Alumina) with β-zeolite ion-exchanged with Fe ion and MFI zeolite ion-exchanged with hydrogen were mixed with each other to prepare a catalyst component, after Mixed Alumina was treated to carry catalyst metals (Pt and Pd). An integral-structure support was coated with the catalyst component to prepare a comparative oxidation catalyst for exhaust gas purification. It contained no β-zeolite ion-exchanged with cerium.

### <Preparation of catalyst component>

Mixed Alumina as activated alumina was impregnated with a 20% by weight aqueous solution of platinum (II) nitrite diamine and 28% by weight aqueous solution of palladium nitrate diamine to have a Pt and Pd metal element contents of respective 1.47 and 0.49% by weight based on the total composition. It was then dried to prepare Mixed Alumina dispersed with the noble metals (Pt-Pd/Al₂O₃).

The Pt-Pd/Al₂O₃ powder (a), β-zeolite ion-exchanged with Fe (b) and MFI zeolite ion-exchanged with hydrogen (c) were mixed with each other and stirred to prepare a catalyst component (Catalyst Component 3). It had a composition of a/b/c of 100/20/20.

### <Coating of integral-structure support>

A slurry was prepared by incorporating 100 parts by weight of Catalyst Component 3 with 86 parts of water and 7.6 parts of acetic acid with stirring. A commercial ceramic honeycomb support A (400 cpsi, wall thickness: 6 mil) was wash-coated in the slurry, dried and then calcined at 450°C for 0.5 hours to prepare the catalyst-coated support (Comparative Example Catalyst 2). It contained Pt metal, Pd metal and Catalyst Component 3 at 1.5, 0.5 and 142 g/L, respectively.

### <Evaluation of catalyst performance>

In order to evaluate unburned HC oxidation performance of the catalyst, temperature (°C) of exhaust gases leaving Comparative Example Catalyst 2 was monitored from start of diesel fuel injection to end of the injection in the same manner as in EXAMPLE 1. Figure 2 presents the results illustrating exhaust gas temperature rise behavior, where the axis of ordinate represents ΔT and axis of abscissa represents injection time.

### COMPARATIVE EXAMPLE 3

A catalyst component was prepared using Mixed Alumina treated to carry catalyst metals (Pt and Pd) which was not mixed with β-zeolite ion-exchanged with cerium. Then, an integral-structure support was coated with the catalyst component to prepare a comparative oxidation catalyst for exhaust gas purification.

### <Preparation of catalyst component>

Mixed Alumina as activated alumina was impregnated with a 20% by weight aqueous solution of platinum (II) nitrite diamine and 28% by weight aqueous solution of palladium nitrate diamine to have a Pt and Pd metal element contents of respective 1.06 and 0.35% by weight based on the total composition. It was then dried to prepare Mixed Alumina dispersed with the noble metals (Pt-Pd/Al₂O₃), Catalyst Component 4

### <Coating of integral-structuresupport>

A slurry was prepared by incorporating 100 parts by weight of Catalyst Component 4 with 86 parts of water and 7.6 parts of acetic acid with stirring. A commercial ceramic honeycomb support A (400 cpsi, wall thickness: 6 mil, diameter: 143.8 mm and length: 76.2 mm (volume: 1240 mL)) was wash-coated in the slurry, dried and then calcined at 450°C for 0.5 hours to prepare the catalyst-coated support (Comparative Example Catalyst 3). It contained Pt metal, Pd metal and Catalyst Component 4 at 1.5, 0.5 and 142 g/L, respectively.

### <Evaluation of catalyst performance>

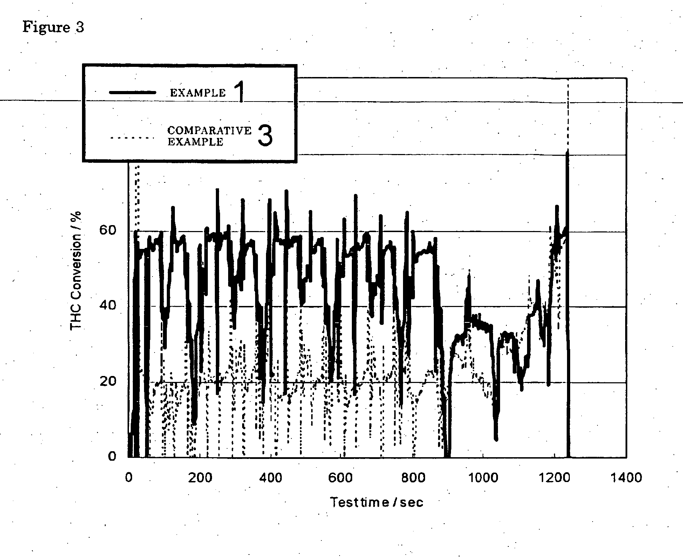

Unburned hydrocarbon oxidation performance (purification performance) of the catalyst was evaluated in HC transient modes (ECE+EUDC120 mode) on an engine bench. The results are given in Figure 3.

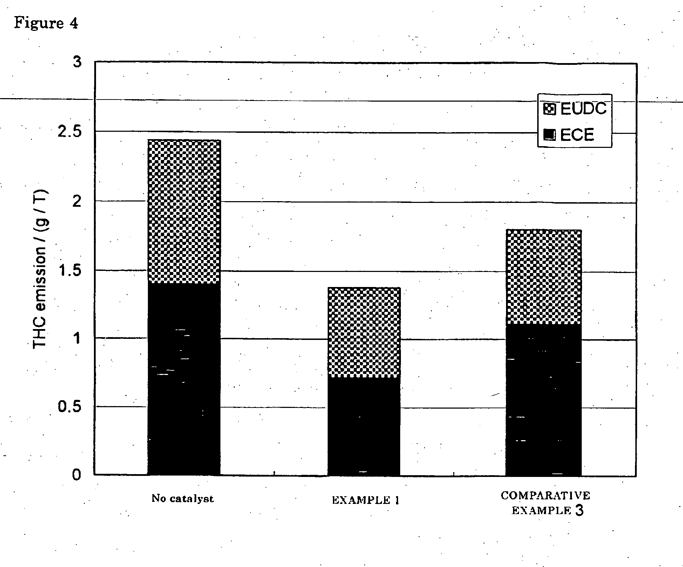

In Figure 3, the axis of ordinate represents conversion (% by volume) of total HC (THC) in exhaust gases as hydrocarbons having one carbon atom, and the axis of abscissa represents elapsed time. Figure 4 shows total hydrocarbon emissions as THC in the EUDC and ECE modes, based on the results of one run, shown in Figure 3. The axis of ordinate also shows the data of THC in exhaust gases not treated by a catalyst, for comparison.

ECE and EUDC120 modes are transient evaluation modes established for EU's exhaust gas regulations.

Theses results indicate that the oxidation catalyst prepared in EXAMPLE 1 gives a higher maximum attainable temperature than the ones prepared in COMPARATIVE EXAMPLES 1 and 2, confirming contribution of the β-zeolite ion-exchanged with cerium to improved combustibility of unburned hydrocarbons.

The catalyst prepared in EXAMPLE 1 has much higher oxidation activity than the one prepared in COMPARATIVE EXAMPLE 1, and higher exhaust gas temperature stability showing less temperature variations than the one prepared in COMPARATIVE EXAMPLE 2, which contains no β-zeolite ion-exchanged with cerium.

The catalyst prepared in COMPARATIVE EXAMPLE 3, containing no zeolite, is inferior to the one prepared in EXAMPLE 1 in a transient mode, e.g., ECE or EUDC mode, which is established to confirm catalyst HC oxidation performance at low temperature.

As discussed above, the catalyst of the present invention shows excellent capability as an exhaust gas purification catalyst, because of its excellent performance of achieving a rise of exhaust gas temperature, when unburned hydrocarbons are sufficiently injected, and stability of increased exhaust gas temperature.

The oxidation catalyst of the present invention for exhaust gas purification can efficiently oxidize unburned hydrocarbons contained in exhaust gases and achieve a rise of catalyst temperature with a low rate of fuel injection in an engine, in particular in diesel engine, and is applicable to an exhaust gas purification system.

## Claims

1. An oxidation catalyst for exhaust gas purification, having an integral-structure support coated with a catalyst layer exhibiting a catalytic activity in hydrocarbon oxidation, wherein the catalyst layer contains platinum- and palladium-carrying activated alumina, wherein the activated alumina is present in an amount of 50 % by weight or more based on the total catalyst mass, and further contains β-zeolite ion-exchanged with cerium,
wherein the activated alumina has a specific surface area of 30 to 300 m²/g and is contained at 25 to 285 g per unit volume (liter) of the integral-structure support,
wherein the activated alumina contains 20 to 90 % by weight, based on the total alumina contained in the catalyst, of an alumina/lanthanum composite oxide having an La-O-base structure, and
wherein the β-zeolite ion-exchanged with cerium is contained at 4 to 115 g per unit volume (liter) of the integral-structure support.

2. The oxidation catalyst according to Claim 1 for exhaust gas purification, wherein platinum and palladium are contained at 0.1 to 5 g and 0.05 to 2 g, respectively, per unit volume (liter) of the integral-structure support.

3. The oxidation catalyst according to Claim 1 or 2 for exhaust gas purification, wherein the β-zeolite ion-exchanged with cerium contains cerium (Ce) at 0.15 to 3.4% by weight as cerium oxide (CeO₂).

4. The oxidation catalyst according to one of Claims 1 to 3 for exhaust gas purification, wherein the β-zeolite ion-exchanged with cerium has a silica (SiO₂)/alumina (Al₂O₃) molar ratio (SAR) of 18 to 200.

5. The oxidation catalyst according to one of Claims 1 to 4 for exhaust gas purification, wherein the integral-structure support is of a flow-through type having a cell density of 100 to 900 cells/inch².

6. An exhaust gas purification system equipped with the oxidation catalyst of one of Claims 1 to 5 for exhaust gas purification, disposed in a stream of exhaust gases containing unburned hydrocarbons, wherein the exhaust gases are passed through the oxidation catalyst to oxidize the unburned hydrocarbons, and the resulting heat of oxidation is utilized to increase exhaust gas temperature.

7. The exhaust gas purification system according to Claim 6, wherein a catalyst for purifying NOx by adsorption is further disposed in a stream of exhaust gases downstream of the oxidation catalyst.

8. The exhaust gas purification system according to Claim 6 or 7, wherein a filter or catalytic filter for capturing particulate matter contained in the exhaust gases is further disposed in a stream of exhaust gases downstream of the oxidation catalyst.

## Patentansprüche

1. Oxidationskatalysator zur Abgasreinigung, der einen Träger integraler Struktur aufweist, der mit einer Katalysatorschicht, die in der Kohlenwasserstoffoxidation eine katalytische Aktivität aufweist, beschichtet ist, wobei die Katalysatorschicht Platin- und Palladium-tragendes aktiviertes Aluminiumoxid enthält, wobei das aktivierte Aluminiumoxid in einer Menge von 50 Gew.-% oder mehr, bezogen auf die Gesamtmasse des Katalysators, vorliegt, und ferner mit Cer ionenausgetauschten β-Zeolith enthält,
wobei das aktivierte Aluminiumoxid eine spezifische Oberfläche von 30 bis 300 m²/g aufweist und zu 25 bis 285 g pro Einheitsvolumen (Liter) des Trägers integraler Struktur enthalten ist,
wobei das aktivierte Aluminiumoxid 20 bis 90 Gew.-%, bezogen auf das gesamte in dem Katalysator enthaltene Aluminiumoxid, eines Aluminiumoxid/Lanthan Compositoxids mit einer La-O-basierten Struktur enthält, und wobei der mit Cer ionenausgetauschte β-Zeolith zu 4 bis 115 g pro Einheitsvolumen (Liter) des Trägers integraler Struktur enthalten ist.

2. Oxidationskatalysator zur Abgasreinigung nach Anspruch 1, wobei Platin und Palladium zu 0,1 bis 5 g beziehungsweise zu 0,05 bis 2 g pro Einheitsvolumen (Liter) des Trägers integraler Struktur enthalten sind.

3. Oxidationskatalysator zur Abgasreinigung nach Anspruch 1 oder 2, wobei der mit Cer ionenausgetauschte β-Zeolith Cer (Ce) zu 0,15 bis 3,4 Gew.-% als Ceroxid (CeO₂) enthält.

4. Oxidationskatalysator zur Abgasreinigung nach einem der Ansprüche 1 bis 3, wobei der mit Cer ionenausgetauschte β-Zeolith ein Molverhältnis von Siliciumoxid (SiO₂)/Aluminiumoxd (Al₂O₃) (SAR) von 18 bis 200 aufweist.

5. Oxidationskatalysator zur Abgasreinigung nach einem der Ansprüche 1 bis 4, wobei der Träger integraler Struktur vom Durchflusstyp ist, der eine Zellendichte von 100 bis 900 Zellen/inch² aufweist.

6. Abgasreinigungssystem, ausgestattet mit dem Oxidationskatalysator zur Abgasreinigung nach einem der Ansprüche 1 bis 5, der in einem Abgasstrom bereitgestellt ist, welcher unverbrannte Kohlenwasserstoffe enthält, wobei die Abgase durch den Oxidationskatalysator geleitet werden, um die unverbrannten Kohlenwasserstoffe zu oxidieren, und die resultierende Wärme der Oxidation verwendet wird, um die Abgastemperatur zu erhöhen.

7. Abgasreinigungssystem nach Anspruch 6, wobei ferner ein Katalysator zur NOx-Reinigung durch Adsorption in einem Abgasstrom stromabwärts des Oxidationskatalysators bereitgestellt ist.

8. Abgasreinigungssystem nach Anspruch 6 oder 7, wobei ferner ein Filter oder katalytischer Filter zum Einfangen partikulärer Stoffe, die im Abgas enthalten sind, in einem Abgasstrom stromabwärts des Oxidationskatalysators bereitgestellt ist.

## Revendications

1. Catalyseur d'oxydation destiné à l'épuration des gaz d'échappement, ayant un support à structure intégrée enduit d'une couche de catalyseur présentant une activité catalytique dans l'oxydation des hydrocarbures, où la couche de catalyseur contient de l'alumine activée supportant du platine et du palladium, où l'alumine activée est présente en une quantité de 50% en poids ou plus sur base de la masse totale de catalyseur, et elle contient en outre, une β-zéolite ayant subi un échange d'ions avec le cérium,
où l'alumine activée a une surface spécifique allant de 30 à 300 m²/g et elle est présente en une quantité allant de 25 à 285 g par unité de volume (litre) du support à structure intégrée,
où l'alumine activée contient 20 à 90% en poids, sur base de l'alumine totale contenue dans le catalyseur d'un oxyde composite alumine/lanthane ayant une structure de base La-O, et
où la β-zéolite ayant subi un échange d'ions avec le cérium est présente en une quantité allant de 4 à 115 g par unité de volume (litre) du support de structure intégrée.

2. Catalyseur d'oxydation selon la revendication 1 pour l'épuration des gaz d'échappement,
où le platine et le palladium sont présents en une quantité allant de 0,1 à 5 g et 0,05 à 2 g, respectivement, par unité de volume (litre) du support de structure intégrée.

3. Catalyseur d'oxydation selon la revendication 1 ou 2 pour l'épuration des gaz d'échappement, où la β-zéolite ayant subi un échange d'ions avec le cérium contient le cérium (Ce) en une quantité allant de 0,15 à 3,4% en poids comme oxyde de cérium (CeO₂).

4. Catalyseur d'oxydation selon l'une des revendications 1 à 3 pour l'épuration des gaz d'échappement, où la β-zéolite ayant subi un échange d'ions avec le cérium présente un rapport molaire silice (SiO₂)/alumine (Al₂O₃) (SAR) allant de 18 à 200.

5. Catalyseur d'oxydation selon l'une des revendications 1 à 4 pour l'épuration des gaz d'échappement, où le support de structure intégrée est de type à écoulement ayant une densité cellulaire de 100 à 900 cellules/pouces².

6. Système d'épuration de gaz d'échappement équipé du catalyseur d'oxydation selon l'une des revendications 1 à 5 pour l'épuration des gaz d'échappement, disposé dans un courant de gaz d'échappement contenant des hydrocarbures non brûlés, où les gaz d'échappement sont passés au travers du catalyseur d'oxydation pour oxyder les hydrocarbures non brûlés, et la chaleur résultant de l'oxydation est utilisée pour augmenter la température des gaz d'échappement.

7. Système d'épuration de gaz d'échappement selon la revendication 6, où un catalyseur pour l'épuration des NOₓ par adsorption est encore disposé dans un courant de gaz d'échappement en aval du catalyseur d'oxydation.

8. Système d'épuration de gaz d'échappement selon la revendication 6 ou 7, où un filtre ou filtre catalytique pour capturer la matière particulaire présente dans les gaz d'échappement, est encore disposé dans un courant de gaz d'échappement en aval du catalyseur d'oxydation.
